# EUROPEAN PATENT SPECIFICATION

(11) **EP 0 670 022 B1**
(45) Date of publication and mention of the grant of the patent: **15.01.1997**
(21) Application number: 93924147.7
(22) Date of filing: 02.11.1993
(51) Int. Cl.: F16L 23/024

(54) **IMPROVEMENTS IN OR RELATING TO CLAMPS AND CONNECTORS**
ROHRSCHELLEN UND VERBINDUNGSSTÜCKE
AMELIORATIONS APPORTEES A DES FIXATIONS ET DES CONNECTEURS

(30) Priority: 05.11.1992 GB 9223206; 24.08.1993 GB 9317574
(43) Date of publication of application: 06.09.1995
(73) Proprietor: HYDRA-TIGHT LIMITED, Walsall, West Midlands WS2 0LB (GB)
(72) Inventor: WALMSLEY, Owen, Chorley, Lancashire PR6 7TA (GB); EMMETT, Robert, Lancaster LA1 4HZ (GB)
(74) Representative: Carpenter, David
(86) International application number: GB9302248
(87) International publication number: WO9410493

(56) References cited:
- DE-A- 2 004 882
- DE-C- 948 463
- GB-A- 406 328
- GB-A- 2 016 626
- US-A- 1 814 478

## Description

This invention relates to clamps and connectors. It is particularly, but not exclusively, concerned with clamping an elongate member such as a pipe for carrying fluid or connecting more than one such elongate member.

US-A-1814478 discloses a connector fitting for joining a threadless conduit to a conduit box by way of a gripping member having a deformable but incompressible core about which is wound a coil of relatively thin armour wire, the coil being wrapped about the conduit as a circumferentially discontinuous, multi-turn helix and contained with the conduit in a socket of the box between a socket shoulder and a screw for applying axial pressure to compress the gripping member against the shoulder. Upon compression from the screw along the axis of the conduit the coils of armour wire about the periphery of the conduit deform locally and, constrained by the shoulder and socket, tend to embed themselves into the conduit to form a gripping means. Such a gripping structure does not provide any fluid sealing function that makes it suitable for use with pipes and the like.

According to this invention a clamp or connector comprises structure having an axis and providing a surface inclined to the axis, angularly extending gripping means for engaging the inclined surface and gripping a surface of an elongate member, the gripping means being circumferentially discontinuous such that the gripping means is circumferentially adjustable in response to the surface of the elongate member, and means for moving the inclined surface and the gripping means relative to each other to urge the gripping means more firmly into engagement with the elongate member and is characterised by a deformable annular seal disposed adjacent to the gripping means for sealing between the structure and the elongate member.

The structure may comprise two parts, one of which parts provides the inclined surface, and means for moving the two parts relative to each other to effect the firm engagement.

Each part may have a said inclined surface and associated gripping means.

The gripping means may comprise a gripping element extending the full angular extent of the surface of the elongate members viewed axially in use.

The gripping element may comprise a substantially annular member with confronting end faces on spaced end regions when unstressed, the end regions being chamfered to provide cooperable surfaces on overlapping of the end regions in use.

The gripping means may comprise a surface inclined to the axis and slidably cooperable with the inclined surface of the structure.

The gripping means may be circumferentially contractible and expansible and axially deformable.

The structure may comprise a housing part and an annular member engaging the seal axially.

In one example the structure inclined surface is on the housing part and/or the annular member.

The invention may be performed in various ways and some specific embodiments with possible modifications will now be described by way of example with reference to the accompanying drawings, in which:
- Fig. 1: is a side view part in longitudinal section of a pipe clamp;
- Fig. 2: is a perspective view of part of Fig. 1 with a different pipe;
- Fig. 2A: shows a modification;
- Figs. 3A to 3D: are sections positions of a gripping element;
- Figs. 4 to 6: are views similar to Fig. 1 of further clamps;
- Fig. 7: is similar to Fig. 3;
- Fig. 8: is a further modification;
- Fig. 9: is an axial view of part of Fig. 8;
- Fig. 10: shows part of another arrangement;
- Fig. 11: shows a further embodiment;
- Fig. 12: is a view of Fig. 1 prior to tightening;
- Fig. 13: is a section of another arrangement;
- Fig. 14: is an axial view of a gripper element;
- Fig. 15: is a view on arrow A of Fig. 14 on an enlarged scale;
- Fig. 16: is a section through the element of Fig. 14; and
- Fig. 17: shows use of the element of Fig. 14.

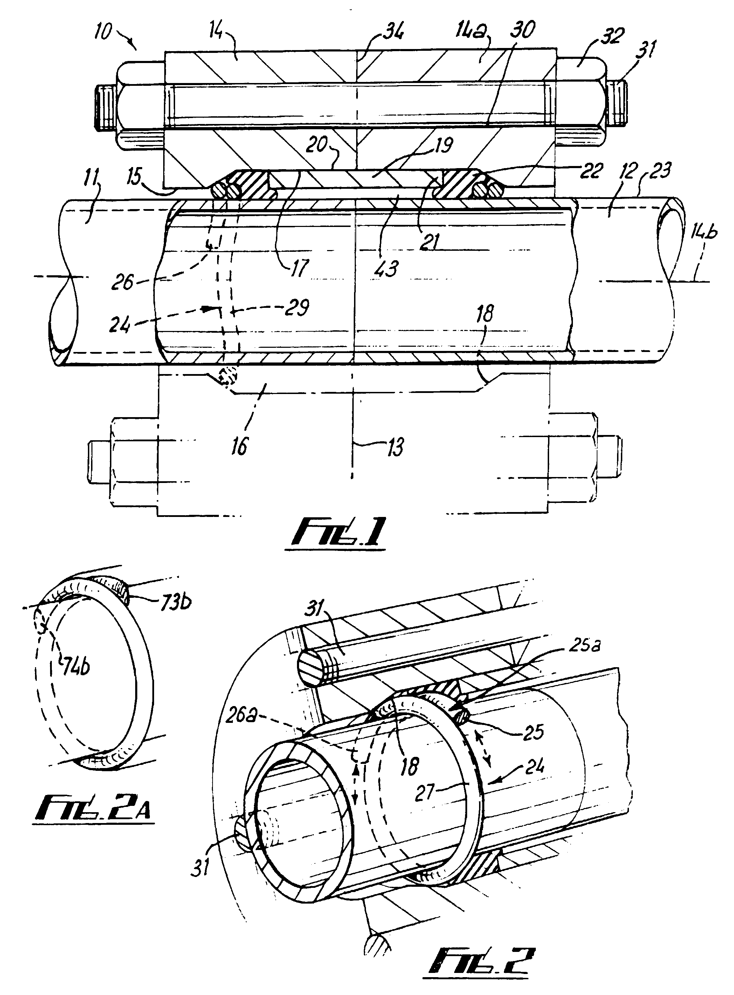

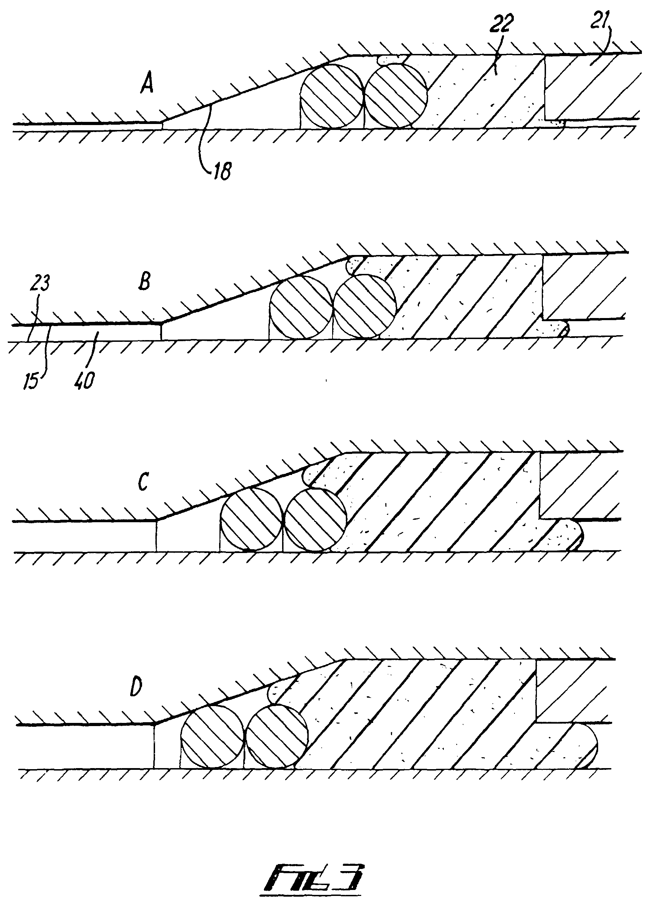

A clamp or connector 10 for an elongate member, for example a pipe, is shown in Figs.1, 2 for connecting or clamping the ends of two pipes 11, 12. The clamp 10 in an unstressed condition is symmetrical about a central transverse plane 13 but this is not essential.

As shown the clamp 10 has two annular housing parts 14, 14a each having a central longitudinal axis 14b and having at their axially inner ends on their inner circular section surfaces 15 an annular recess 16 having at its axially inner end an axial surface 17 and at its axially outer end an axially outwards and radially inwards inclined surface 18. A central axial annular distance piece 19 is located in the recesses 16 with a radially outer surface 20 nominally engaging the surfaces 17.

The end portions 21 of the distance piece 19 engage annular deformable seals 22 which seal between the surfaces 17, 18 and the outer surface 23 of the respective pipe 11, 12.

At their axially outer ends the seals 22 engage respective gripping elements 24 which engage the inclined surface 18 and pipe surface 23.

The gripping elements 24 are formed as a ring of a helically wound wire 27, the length of the ring 27 between the ends 25, 26 of the wire being for example between 10mm and 20mm greater than the engaged circumference of the pipe. The end portions 25a, 26a of the wire thus overlap as seen axially.

The housing parts 14, 14a are formed with a plurality of equi-angularly spaced bores 30 which are aligned to receive bolts 31 with nuts 32 so that on tightening of the nuts 32 the parts 14, 14a are moved towards each other and the gripping elements 24 are moved axially (and thus radially inwards) into gripping engagement with the pipes.

Before tightening of the nuts 32, the ends of the pipes 11, 12 are inserted into the housings 14, 14a until the pipe ends engage, Fig. 12.

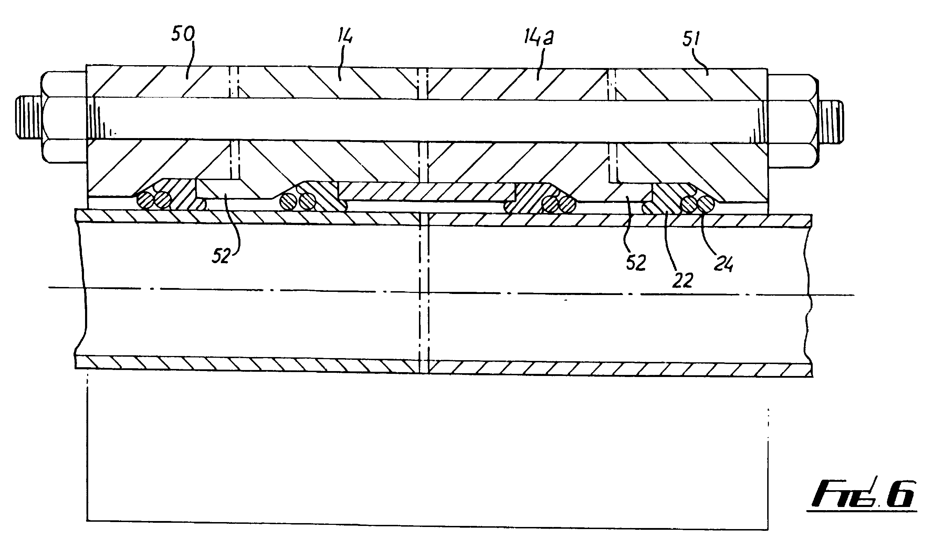

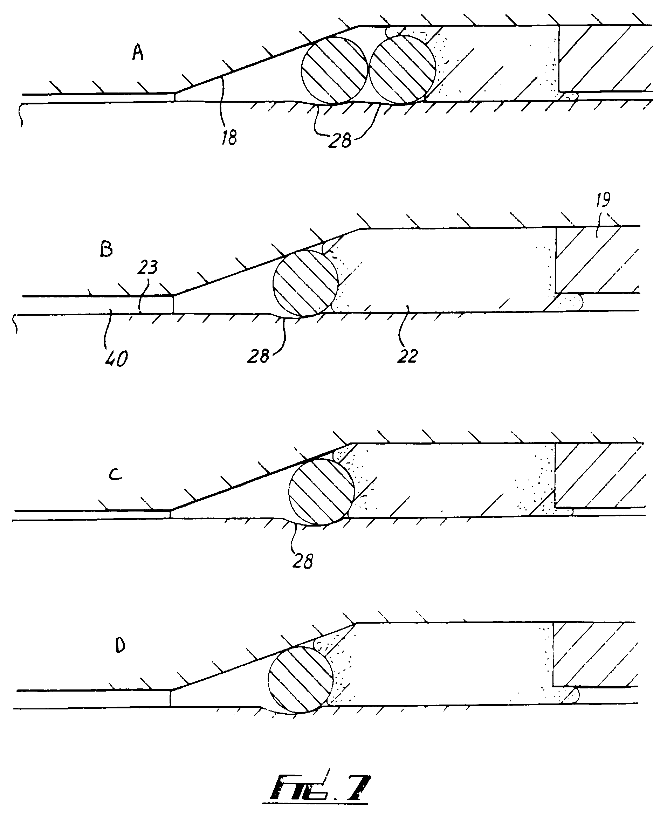

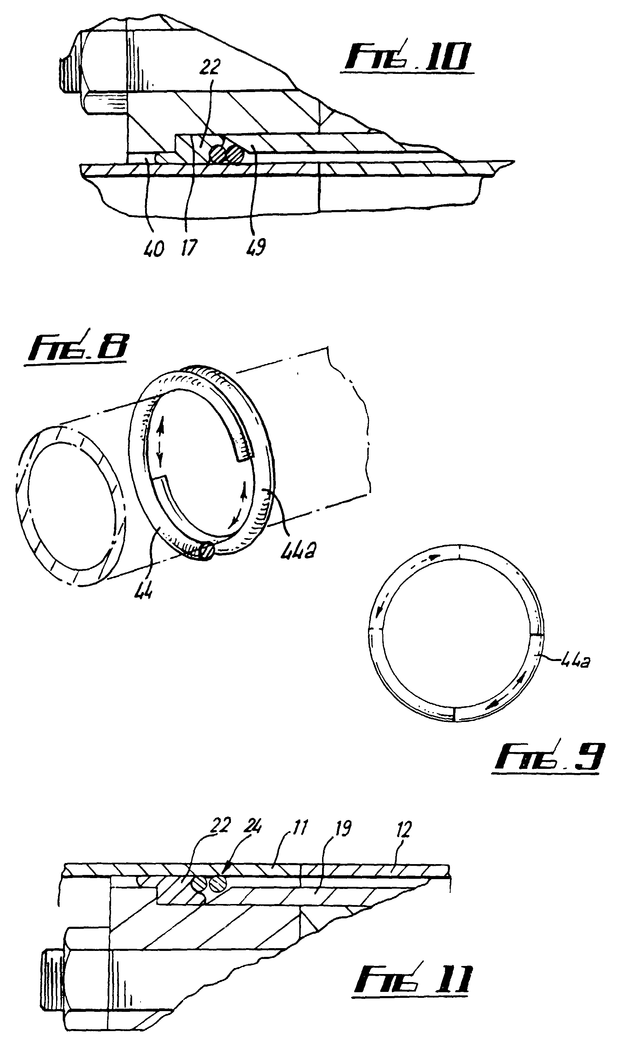

As shown in Fig. 1, the nuts 32 have been tightened until the axially inner faces 34 of the housings 14, 14a engage but they could be spaced as shown dotted in Fig. 6. The pipe ends could also be slightly spaced, again as shown in Fig. 6.

Depending on the degree of tightening, the gripping element 24 may gouge into the pipe, the material of the ring being harder than the material of the pipe. The circular pipe is gripped around its complete circumference as seen axially.

The cross-section diameter of the wire 27 would typically be at least 1% of the external diameter of the pipe.

The clamp or connector 10 is particularly arranged for accommodating ovality of the pipes 11, 12, that is where the cross-sections of the pipes 11, 12 depart from true circles.

The nominal outer diameter of the pipes 11, 12 may range for example from 1.9cm to 53cm (¾ inch to 24inch) and they are made typically with a diameter tolerance of plus or minus 1%.

If the pipe outer surface is oval, the element 24 can adjust so that it still grips the pipe continuously through a full circumference as seen axially, within the design range of the clamp and the expected tolerance of the pipe.

The internal pressure in the pipes 11, 12 when installed for example in a pipeline may range up to for example 20000 pounds per square inch or more, (138MPa).

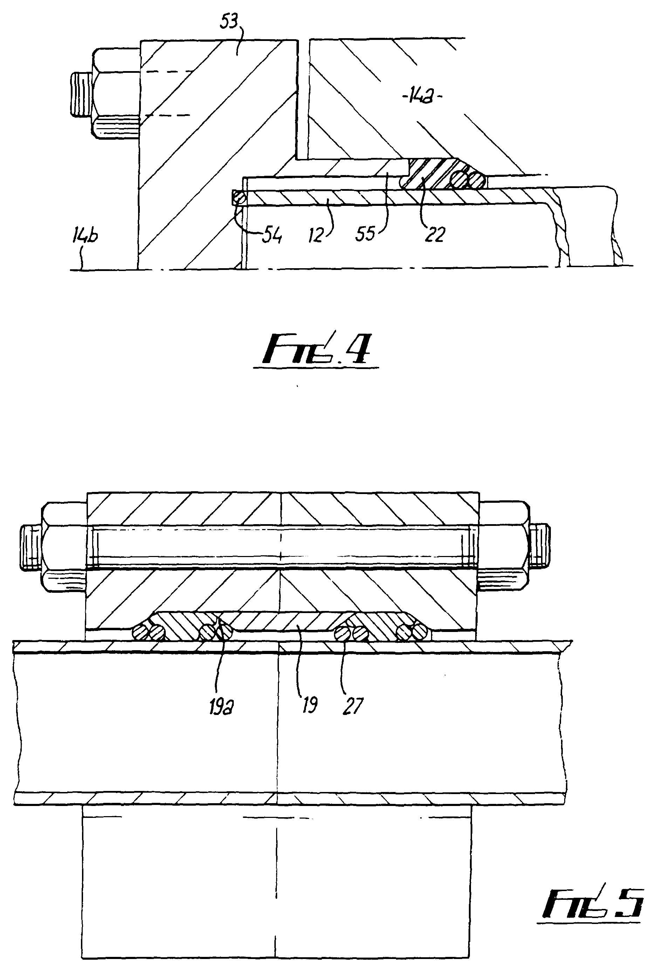

Figs. 3A to 3D show examples of adjustment of the element 24 and seal 22 to accommodate variations in the radius or diameter of the pipe as indicated by the different distances 40 between the surfaces 15 and 23. As the element 24 adjusts to the ovality, the ends 25, 26 of wire 27 may move angularly towards or away from each other as seen axially and portions of the wire 24 are displaced axially from the positions adopted when the pipe is circular. As can be seen from Figs. 3A to 3D, as the wire 27 moves along the inclined surface 18 the wire 27 moves axially and radially. The element 24 may additionally tilt and the axes of the housing parts 14, 14a become non-coaxial with the axes of the pipes.

The seals 22 are made of material which can flow as required, for example graphite or polytetrafluoroethylene (PTFE). Typically the clamp would be intended to be in position for a considerable period, and if removed the seal would typically be replaced before re-use of the clamp.

If additional grip is desired, further housing parts with gripping elements and seals can be added. For example as in Fig. 6 where housing parts 50, 51 have been added, the parts 14, 14a having inner annular extensions 52 engaging the seals 22 in the parts 50,51.

In some cases only one pipe is gripped. For example as in Fig. 4 the housing part 14 is replaced by an end cap 53 having an annular extension 55 engaging seal 22 in part 14a and an annular seal 54 in cap 53 engaging the end of the pipe.

In the embodiment of Fig. 5, additional wires 27 are located at the axially inner ends of the seals 22 and the axial ends of the distance piece 19 are inclined outwards to provide surfaces 19a engaging the respective wires 27 to give additional grip on the pipes. This modification can be used in other embodiments such as Figs. 1, 6.

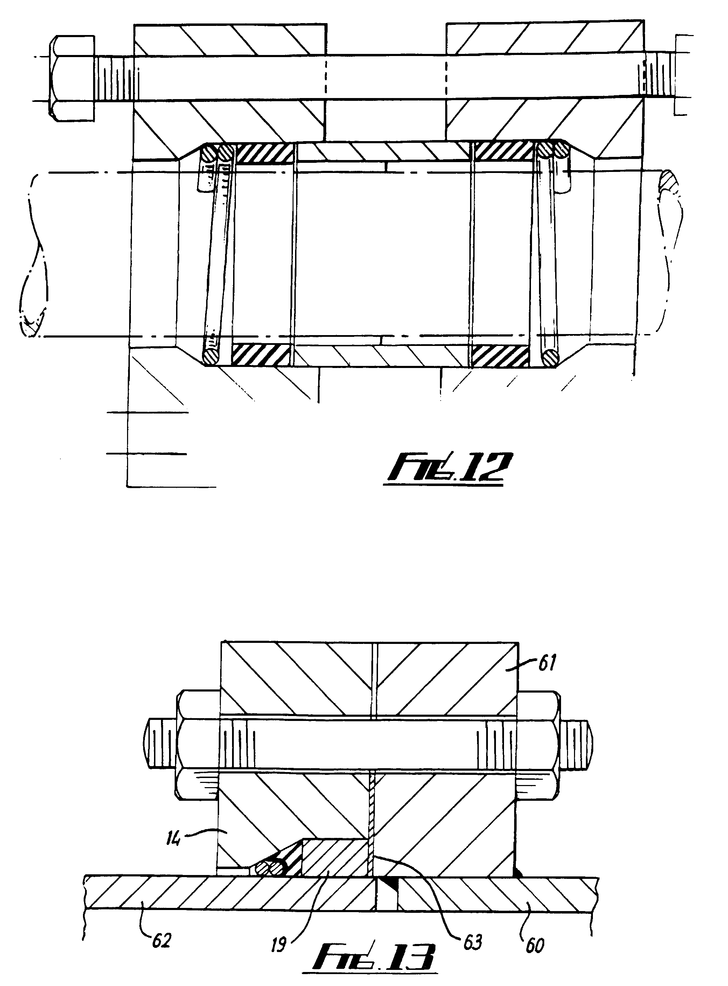

Fig. 7 shows the position of the gripping element for an elliptical pipe at four positions equiangularly spaced around the pipe, the wire 27 gouging into the pipe at 28. If the pipe is not circular the wire 27 moves radially and axially to adjust (see dotted at 29 Fig. 1) and continues to grip the pipe around the circumference within the design parameters of a particular arrangement. In Fig. 2 the pipe is not oval.

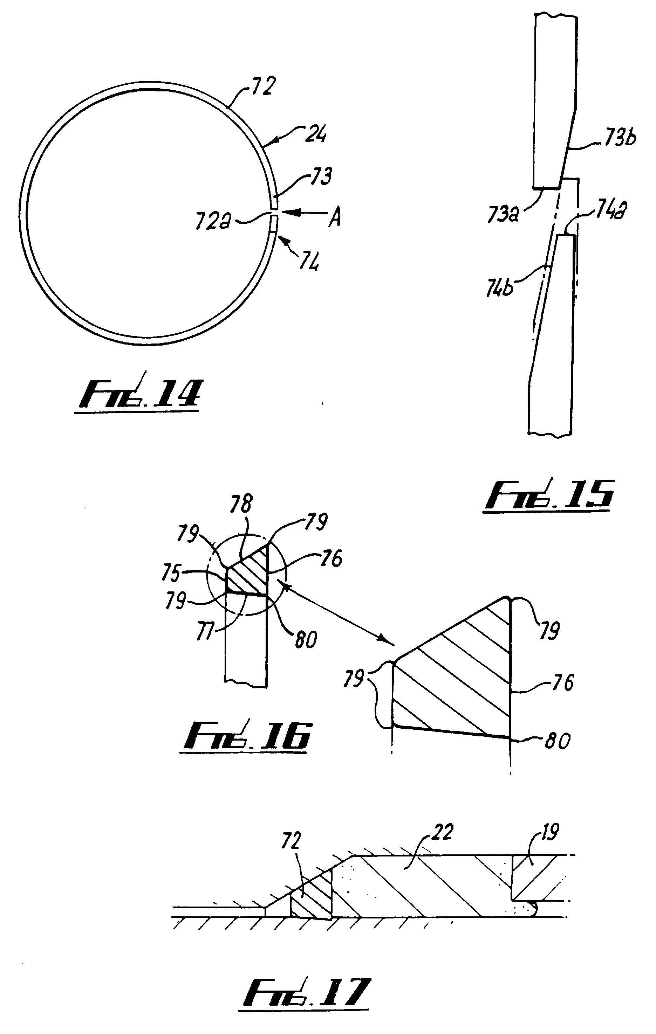

In the arrangement of Fig. 10, only the ends 49 of distance piece 19 are inclined but this is not appropriate in curcumstances where the gap 40 is so large that the seal 22 is forced out. It will be understood that the gripping element 24 engages the seal 22 which provides a reaction force on the element; if the reaction force is reduced, the effectiveness of the gripping element is reduced.

Correspondingly the seal 22 should not pass to an undesirable extent into the gap 43 between the distance piece 19 and surface 23 (Fig. 1).

In Figs. 8, 9 the gripping element 24 is formed by a wire 44 which extends incompletely around the pipe. A similar wire 44a is located axially inwards of the wire 44 but rotated through 180° so that the wire 44a overlaps the gap between the ends of wire 44. The seal 22 is located axially inwards of and engaging the wire 44a which prevents the seal 22 moving into the gap between the ends of wire 44.

The pipes 11, 12 can be radially outwards of the clamp parts, for example as shown in Fig. 11; this can apply to other embodiments.

In the above embodiments the gripping element 24 is circumferentially adjustable around the pipe and engages the pipe surface continuously around an arcuate portion, preferably a full peripheral engagement.

Fig. 13 shows a use of the clamp in repair. If a pipe 62 has a damaged portion removed, an external apertured flange 61 can be welded to the end of a replacement pipe length 60 secured in place with an annular gasket seal 63 between the flange 61 and housing part 14. The other end of length 60 would be similarly secured to another pipe 62 at the other end of the gap produced by removal of the damaged portion.

Figs. 14 to 17 show another form of gripping element 24. In this case the gripping element is a split ring 72 having, in an unstressed condition, a gap 72a between ends 73, 74. The ends 73, 74 have flat radial faces 73a, 74a and are chamfered in opposite sides to form flat faces 73b, 74b, Fig. 15. The cross-section of the ring is shown in Fig. 16 and has flat axial end faces 75, 76, a flat radially inner face 77 which extends radially inwards as it extends axially inwards, and a radially outer face 78 which extends radially outwards as it extends axially inwards. The inclination of face 78 to the central axis 14b is nominally the same as surface 19a so that in use the surface 78 can slide along surface 19a. Corners or edges 79 between faces 75, 78 and 78, 76 and 75, 77 are rounded but axially and radially inner corner 80 between faces 76, 77 is sharp so that on tightening of nuts 32, the edge 80 can dig or gouge into the pipe (see Fig. 17). This provides additional resistance to relative axial separating movement between the pipes 11, 12.

The ring 72 can be formed by appropriately shaving and cutting a circular section ring.

For larger diameter pipes, it is desirable to similarly chamfer the ends of other forms of gripping element. For example as shown at Pig. 2A to reduce undesirable shearing forces on the seal 22.

In some cases an annular seal is provided between the confronting end faces of parts 11, 12.

In some cases of a thin-walled pipe, the effect of the gripping element may be to remove ovality in the region of the gripping element.

If the elongate member(s) are solid e.g. a turned or extruded rod of essentially uniform circular cross-section, it may be possible to omit seal 22 but the seal permits positional adjustment in the operation of the clamp or connector.

If the clamp is to be used with elongate members which have external surfaces essentially circular, for example solid rods produced by turning or extrusion, the element 24 would not be displaced axially unless it deformed the pipe but if the pipe is oval the element 24, 72 is expanded or contracted circumferentially and deformed axially under the action of the seal and the inclined surface 18.

The elongate members may be of different materials, for example plastics or steel or fibreglass.

The gripping means described above are circumferentially discontinuous, as compared with an integral ring, and as viewed axially in use extend fully around the inner or outer periphery of the pipe.

## Claims

1. A clamp or connector (10) comprising structure (14, 14a, 50, 51, 53) having an axis (14b) and providing a surface (18, 19a) inclined to the axis, angularly extending gripping means (24, 44, 44a) for engaging the inclined surface and gripping a surface of an elongate member (11, 12), the gripping means being circumferentially discontinuous such that the gripping means is circumferentially adjustable in response to the surface of the elongate member, means (31, 32, 19, 22) for moving the inclined surface and the gripping means relative to each other to urge the gripping means more firmly into engagement with the elongate member and characterised by a deformable annular seal (22) disposed adjacent to the gripping means for sealing between the structure and the elongate member.

2. A clamp or connector as claimed in claim 1 characterised in that the deformable annular seal (22) is disposed axially with respect to the gripping means (24, 44, 44a) and the means for moving the inclined surface and gripping means relative to each other comprises means (21, 55) to urge the seal axially into conformable abutment with the gripping means about the circumference of the elongate member.

3. A clamp or connector as claimed in claim 2 characterised in that the structure comprises a housing part (14, 14a) containing the seal (22) and an annular member (19, 55) engaging the annular seal axially to exert axial force thereon to generate pressure within the seal confined by the housing part and elongate member, which pressure acts on the gripping means to move it axially in relation to said inclined surface.

4. A clamp or connector as claimed in claim 3 characterised in that both the housing part (14, 14a) and annular member (19, 55) include inclined surfaces (18, 19a) of the structure and each has associated therewith individual circumferentially discontinuous gripping means and a common deformable annular seal disposed axially between and in conformable abutment with said individual gripping means.

5. A clamp or connector as claimed in any one of the preceding claims characterised in that the structure comprises two parts (14, 14a), each of which provides said inclined surface and associated gripping means and seal, and means (31, 32) for moving the two parts relative to each other to effect the more firm engagement.

6. A clamp or connector as claimed in any one of the preceding claims characterised in that the gripping means associated with each inclined surface comprises a gripping element (24) extending at least the full angular extent of the surface of the elongate member viewed axially in use.

7. A clamp or connector as claimed in claim 6 chacterised in that the gripping element comprises two separate circumferentially overlapping gripping members (44, 44a).

8. A clamp or connector as claimed in claim 6, characterised in that the gripping element comprises a substantially annular member (72) with confronting end faces (73a, 74a) on spaced end regions (73, 74) when unstressed, the end regions being chamfered (73b, 74b) to provide a co-operable surfaces on overlapping of the end regions in use.

9. A clamp or connector as claimed in any one of the preceding claims characterised in that the gripping means is circumferentially contractible and expansible and axially deformable.

## Patentansprüche

1. Rohrschelle oder Verbindungsstück (10), mit einem Aufbau (14, 14a, 50, 51, 53), der eine Achse (14b) aufweist und für eine Fläche (18, 19a) sorgt, die zur Achse geneigt ist, sich winklig erstreckenden Greifmitteln (24, 44, 44a) zum Eingreifen in die geneigte Fläche und zum Ergreifen einer Oberfläche eines länglichen Teils (11, 12), wobei die Greifmittel in Umfangsrichtung so diskontinuierlich sind, daß die Greifmittel in Umfangsrichtung in Abhängigkeit von der Oberfläche des länglichen Teils einstellbar sind, Mitteln (31, 32, 19, 22) zum Bewegen der geneigten Oberfläche und der Greifmittel relativ zueinander, um die Greifmittel fester in Eingriff mit dem länglichen Teil zu drücken, und gekennzeichnet durch eine verformbare Ringdichtung (22), die neben den Greifmitteln angeordnet ist, um zwischen dem Aufbau und dem länglichen Teil abzudichten.

2. Rohrschelle oder Verbindungsstück, wie beansprucht in Anspruch 1, dadurch gekennzeichnet, daß die verformbare Ringdichtung (22) im Hinblick auf die Greifmittel (24, 44, 44a) axial angeordnet ist, und die Mittel zum Bewegen der geneigten Fläche und der Greifmittel relativ zueinander Mittel (21, 55) aufweisen, um die Dichtung in Axialrichtung in eine anpaßbare Anlage mit den Greifmitteln rund um den Umfang des länglichen Teils zu drücken.

3. Rohrschelle oder Verbindungsstück, wie beansprucht in Anspruch 2, dadurch gekennzeichnet, daß der Aufbau ein Gehäuseteil (14, 14a) aufweist, das eine Dichtung (22) enthält, und ein ringförmiges Teil (19, 55), das in die Ringdichtung axial eingreift, um hierauf eine Axialkraft auszuüben, um einen Druck innerhalb der Dichtung zu erzeugen, die vom Gehäuseteil und dem länglichen Teil eingeschlossen ist, wobei dieser Druck auf die Greifmittel einwirkt, um sie axial in Zuordnung zur genannten geneigten Fläche zu bewegen.

4. Rohrschelle oder Verbindungsstück, wie beansprucht in Anspruch 3, dadurch gekennzeichnet, daß sowohl das Gehäuseteil (14, 14a) als auch das ringförmige Teil (19, 55) geneigte Flächen (18, 19a) des Aufbaus umfassen, und jeder individuelle, in Umfangsrichtung diskontinuierliche Greifmittel zugeordnet sind, sowie eine gemeinsame, verformbare Ringdichtung axial zwischen den genannten, individuellen Greifmitteln und in anpaßbarer Anlage mit diesen angeordnet ist.

5. Rohrschelle oder Verbindungsstück, wie beansprucht in irgendeinem der vorangehenden Ansprüche, dadurch gekennzeichnet, daß der Aufbau zwei Teile (14, 14a) aufweist, von denen jeder die genannte geneigte Fläche sowie die zugeordneten Greifmittel und die zugeordnete Dichtung aufweist, sowie Mittel (31, 32), um die beiden Teile relativ zueinander zu bewegen, um den kräftigeren Eingriff zu bewirken.

6. Rohrschelle oder Verbindungsstück, wie beansprucht in irgendeinem der vorangehenden Ansprüche, dadurch gekennzeichnet, daß die Greifmittel, die jeder geneigten Fläche zugeordnet sind, ein Greifelement (24) aufweisen, das sich im Gebrauch über mindestens die volle Winkelerstreckung der Oberfläche des axial gesehen, länglichen Teils erstreckt.

7. Rohrschelle oder Verbindungsstück, wie beansprucht in Anspruch 6, dadurch gekennzeichnet, daß das Greifelement zwei getrennte, sich in Umfangsrichtung überlappende Greifglieder (44, 44a) aufweist.

8. Rohrschelle oder Verbindungsstück, wie beansprucht in Anspruch 6, dadurch gekennzeichnet, daß das Greifelement ein im wesentlichen ringförmiges Teil (72) mit zugewandten Endflächen (73a, 74a) an Endbereichen (73, 74) aufweist, die in spannungsfreiem Zustand beabstandet sind, wobei die Endbereiche (73b, 74b) abgeschrägt sind, um an den Endbereichen im Gebrauch bei der Überlappung in Zusammenwirkung bringbare Flächen vorzusehen.

9. Rohrschelle oder Verbindungsstück, wie beansprucht in irgendeinem der vorangehenden Ansprüche, dadurch gekennzeichnet, daß die Greifmittel in Umfangsrichtung zusammendrückbar oder aufweitbar und in Axialrichtung verformbar sind.

## Revendications

1. Collier de serrage ou connecteur (10) comprenant une structure (14, 14a, 50, 51, 53), comportant un axe (14b) et établissant une surface (18, 19a) inclinée vers l'axe, un moyen de serrage à extension angulaire (24, 44. 44a) destiné à s'engager dans la surface inclinée et à serrer une surface d'un élément allongé (11, 12), le moyen de serrage étant circonférentiellement discontinu, de sorte que le moyen de serrage est circonférentiellement ajustable en fonction de la surface de l'élément allongé, et un moyen (31, 32, 19. 22) pour déplacer la surface inclinée et le moyen de serrage l'un par rapport à l'autre, pour entraîner un engagement plus ferme entre le moyen de serrage et l'élément allongé, caractérisé par un joint annulaire déformable (22). agencé près du moyen de serrage pour assurer l'étanchéité entre la structure et l'élément allongé.

2. Collier de serrage ou connecteur selon la revendication 1, caractérisé en ce que le joint annulaire déformable (22) est agencé axialement par rapport au moyen de serrage (24, 44, 44a), le moyen servant à déplacer la surface inclinée et le moyen de serrage l'un par rapport à l'autre comprenant un moyen (21, 55) pour pousser le joint axialement en vue de sa butée d'adaptation contre le moyen de serrage autour de la circonférence de l'élément allongé.

3. Collier de serrage ou connecteur selon la revendication 2, caractérisé en ce que la structure comprend une partie de boîtier (14, 14a) contenant le joint (22) et un élément annulaire (19, 55), s'engageant axialement dans le joint annulaire pour exercer une force axiale sur celui-ci, afin de produire une pression dans le joint délimité par la partie de boîtier et l'élément allongé, cette pression agissant sur le moyen de serrage pour le déplacer axialement par rapport à ladite surface inclinée.

4. Collier de serrage ou connecteur selon la revendication 3, caractérisé en ce que la partie de boîtier (14, 14a) et l'élément annulaire (19, 55) englobent des surfaces inclinées (18, 19a) de la structure, chacun comportant un moyen de serrage individuel, circonférentiellement discontinu, qui y est associé, et un joint annulaire déformable commun agencé axialement entre lesdits moyens de serrage individuels et butant par adaptation contre ceux-ci.

5. Collier de serrage ou connecteur selon l'une quelconque des revendications précédentes, caractérisé en ce que la structure comprend deux parties (14, 14a), chacune de ces parties établissant ladite surface inclinée, un moyen de serrage associé et un joint, ainsi qu'un moyen (31, 32) pour déplacer les deux parties l'une par rapport à l'autre pour assurer un engagement plus ferme.

6. Collier de serrage ou connecteur selon l'une quelconque des revendications précédentes, caractérisé en ce que le moyen de serrage associé avec chaque surface inclinée comprend un élément de serrage (24). s'étendant au moins sur l'extension angulaire complète de la surface de l'élément allongé, dans une vue axiale en service.

7. Collier de serrage ou connecteur selon la revendication 6, caractérisé en ce que l'élément de serrage comprend deux éléments de serrage séparés à chevauchement circonférentiel (44, 44a).

8. Collier de serrage ou connecteur selon la revendication 6, caractérisé en ce que l'élément de serrage comprend un élément pratiquement annulaire (72) avec des faces d'extrémité opposées (73a, 74a) sur les régions d'extrémité espacées (73, 74), dans l'état sans contrainte, les régions d'extrémité étant chanfreinées (73b. 74b) pour établir des surfaces de coopération lors du chevauchement des régions d'extrémité en service.

9. Collier de serrage ou connecteur selon l'une quelconque des revendications précédentes, caractérisé en ce que le moyen de serrage peut être contracté et étendu circonférentiellement et déformé axialement.
